# EUROPEAN PATENT APPLICATION

(11) **EP 2 439 695 A2**
(43) Date of publication of application: **11.04.2012**
(21) Application number: 11179464.0
(22) Date of filing: 31.08.2011
(51) Int. Cl.: G06Q 30/00

(54) **Trip monitoring and inferential location based services**

(30) Priority: 06.10.2010 US 924827
(71) Applicant: NCR Corporation, Duluth, Georgia 30096 (US)
(72) Inventor: Borucki, Robert, Mesa, AZ 85212 (US)
(74) Representative: MacLeod, Roderick William

(57) **Abstract**

Techniques for trip monitoring and inferential location based services are provided. Itineraries for trips of a customer are monitored. As transactions complete in the itineraries, inferences are made to infer the geographical locations for the customer. The inferred geographical locations are used along with preferences for the customer to deliver customized content to the customer and to perform one or more automated actions on behalf of the customer associated with next transactions of the itineraries.

## Description

The present invention relates to trip monitoring.

Customers physically move from place to place as they complete everything from simple tasks such as running personal errands to complicated multi-day journeys. In many cases, there is a desire to receive information on products and services relevant to the customer's physical location at a given time. The content of the desired information may take the shape of: promotional material (offers, discounts, and electronic coupons); area information (directions, maps, local businesses, points of interest); or content that facilitates relevant tasks the customer must carry out based on location (car rental pickup, hotel check-in).

Several technologies exist that are capable of driving relevant content in one or more areas. These solutions normally rely on a user's device reporting its physical location (Global Positioning Satellite (GPS) coordinates, cellular tower triangulation) to a service provider. However, there are many customers who do not yet carry a device capable of providing this information. For these customers, location-based content is normally out of reach.

In various embodiments, techniques for trip monitoring with inferential location based services are presented. According to an embodiment, a method for monitoring with inferential location based services is provided.

Specifically, an itinerary for a customer may be acquired. Next, a notification may be received from an automated agent that indicates the customer has completed one transaction from the itinerary. Then, a geographical location for the customer may be inferred based on the completed one transaction. Finally, customized content may be dynamically pushed to a device of the customer based on the inferred geographical location for the customer.

According to a first aspect of the present invention there is provided a processor-implemented method programmed in a non-transitory processor-readable medium and to execute on one or more processors configured to execute the method, comprising: registering a profile for a customer, the profile identifying preferences for delivering customized content to the customer and automated actions for automatically performing on behalf of the customer when the customer is traveling; acquiring an itinerary for a specific trip of the customer; monitoring transactions for the itinerary to infer a geographical location for the customer based on a particular completed transaction for the itinerary; and dynamically delivering the customized content to the customer and performing the automated actions on behalf of the customer in response to the geographical location, the preferences of the profile, and a next transaction associated with the itinerary.

The step of registering a profile for a customer may further include presenting an interface to a device of the customer for interactively guiding the customer in defining the preferences.

The step of acquiring an itinerary for a specific trip of the customer may further include receiving the itinerary from the customer.

The step of acquiring an itinerary for a specific trip of the customer may further include receiving the itinerary from a third-party service used by the customer in creating the itinerary.

The step of acquiring an itinerary for a specific trip of the customer may further include automatically aggregating elements of the itinerary to create the itinerary from multiple service providers used by the customer to define the elements for the specific trip.

The step of monitoring transactions for the itinerary to infer a geographical location for the customer based on a particular completed transaction for the itinerary may further include receiving a notification from an agent indicating that the particular completed transaction occurred.

The step of monitoring transactions for the itinerary to infer a geographical location for the customer based on a particular completed transaction for the itinerary may further include proactively polling an agent at a predefined date and time associated with the particular completed transaction to confirm the particular completed transaction occurred at the predefined date and time.

According to a second aspect of the invention there is provided a system, comprising: a cloud processing environment having one or more processors and configured and programmed with a inferential location based service to execute the inferential location based service; and a self-service device having one or more processors and configured and programmed with an agent to execute the agent; the inferential location based service is configured to infer geographical locations for a customer based on completed transactions in itineraries for trips of the customer and configured to deliver customized content and perform automated actions for the customer based on the inferred geographical locations, the agent configured to interact with the inferential location based service to report the completed transactions and/or assist the inferential location based service in performing the automated actions.

The inferential location based service may be configured to manage profiles for the customer defining the customized content and the automated actions.

The inferential location based service may be configured to interact with additional agents, each additional agent may be associated with a different self-service device from that which is associated with the agent and remaining ones of the additional agents.

According to a third aspect of the present invention there is provided a processor-implemented method programmed in a non-transitory processor-readable medium and to execute on one or more processors configured to execute the method, comprising: acquiring an itinerary for a customer; receiving a notification from an automated agent that indicates the customer has completed one transaction from the itinerary; inferring a geographical location for the customer based on the completed one transaction; and dynamically pushing customized content to a device of the customer based on the inferred geographical location for the customer.

The method may further comprise receiving a second notification from a second automated agent that indicates the customer has completed a second transaction from the itinerary; inferring a new geographical location for the customer based on the second completed transaction; and dynamically pushing different customized content to the device of the customer based on the inferred new geographical location for the customer.

The step of receiving a notification from an automated agent that indicates the customer has completed one transaction from the itinerary may further include identifying the automated agent based on an Internet Protocol (IP) address associated with an agent device that the automated agent processes on, or the IP address associated with metadata that accompanies the notification.

The step of receiving a notification from an automated agent that indicates the customer has completed one transaction from the itinerary may further include identifying the agent based on an agent identifier associated with metadata that accompanies the notification.

The step of inferring a new geographical location for the customer based on the second completed transaction may further include deriving the geographical location based on an enterprise identifier associated with the completed one transaction.

The step of inferring a new geographical location for the customer based on the second completed transaction may further include deriving the geographical location based on a self-service device identifier associated with the automated agent.

The step of dynamically pushing different customized content to the device of the customer based on the inferred new geographical location for the customer may further include performing an automated action on behalf of the customer to complete or assist in partially completing a next transaction from the itinerary and providing an indication of the automated action to the customer in the custom ized content.

The step of performing an automated action on behalf of the customer may further include processing the action as one or more of: pushing navigational instructions to the device of the customer, the navigation instructions having a start location of the inferred geographical location to a next geographical location associated with the next transaction; checking the customer into a hotel associated with the next transaction; checking out a car rental associated with the next transaction; reserving dinner, event, and/or show commitments associated with the next transaction; and acquiring a boarding pass for transportation associated with the next transaction.

The step of dynamically pushing different customized content to the device of the customer based on the inferred new geographical location for the customer may further include resolving the device and the format of the customized content in response to a profile registered for the customer.

The step of dynamically pushing different customized content to the device of the customer based on the inferred new geographical location for the customer may further include requesting, via the device, that the customer send a validation message to confirm the inferred geographical location before the customized content is pushed to the device of the customer.

These and other aspects of the present invention will become apparent from the following specific description, given by way of example, with reference to the accompanying drawings, in which:

FIG. 1 is a flowchart illustrating steps involved in trip monitoring with inferential location based services, according to one embodiment of the present invention;

FIG. 2 is a flowchart illustrating steps involved in trip monitoring with inferential location based services, according to another embodiment; and

FIG. 3 is a block diagram of a system for implementing the trip monitoring steps of FIG. 1 and FIG. 2.

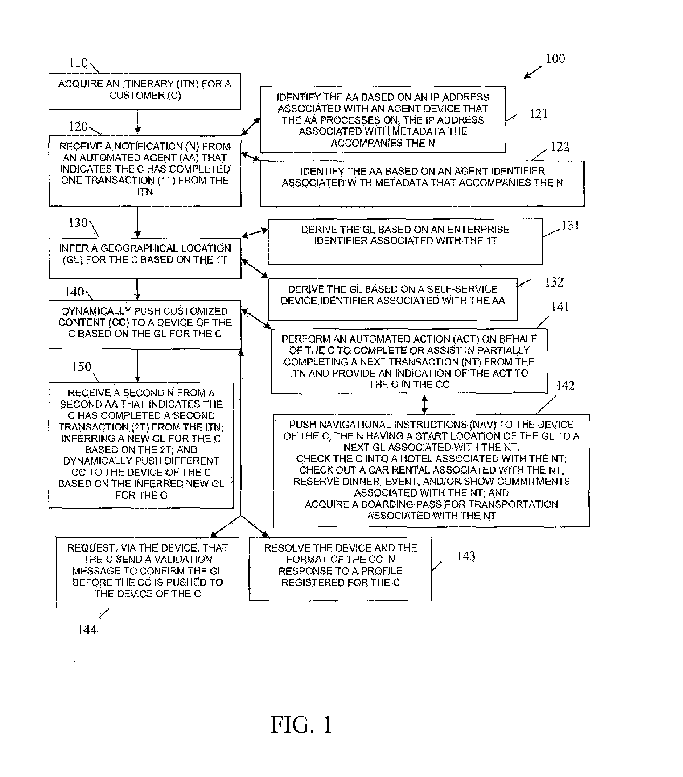

FIG. 1 is a diagram of a method 100 for trip monitoring with inferential location based services, according to one embodiment. The method 100 (hereinafter "inferential location based service") is implemented as instructions residing on a non-transitory computer-readable (processor-readable) storage medium and executed by one or more processors. The processors are specifically configured and programmed to process the inferential location based service. The inferential location based service operates over a network. The network is wired, wireless, or a combination of wired and wireless.

In an embodiment, the inferential location based service executes on one or more processors over the network in a cloud processing environment.

Cloud computing is often defined as computing capabilities that provide an abstraction between computing resources and the underlying technical architecture (e.g., servers, storage, networks), enabling convenient, on-demand network access to a shared pool of configurable computing resources that can be rapidly provisioned and released with minimal management effort or service provider interaction. From the perspective of the user, where and how a computing resource is irrelevant and transparent in cloud computing.

As used herein a "cloud processing environment" refers to a set of cooperating computing resources, such as machines, storage, software libraries, software systems, etc. that form a logical computing infrastructure.

At 110, the inferential location based service acquires an itinerary for a customer (user). The itinerary includes a variety of transaction based elements defined in a structured format that can be automatically evaluated and processed by the inferential location based service.

By way of example only, consider a vacation trip for a customer defined as itinerary in the following format:

D=10-1-2020,T1=AIR;DEL=2000;DPT=0800;PORT=PHX;T2=...

Here, D is a variable defining the date the itinerary was created, which is October 1, 2020. T1 is a variable for a transaction type, here AIR indicates air travel. DEL is a pre-defined tag indicating the airline used, which is Delta (trade mark) and 2000 is the flight number. DPT is a variable for departure time, which is 8:00 a.m. PORT is a variable for the airport of departure and PHX is a tag indicating the departure airport is Phoenix. T2 is a second transaction type in the itinerary, which is not specifically stated but used to illustrate a variety of other transactions, which can be defined in the itinerary.

It is noted that the structured format of the itinerary can be defined in portable formats, such as extensible Markup Language (XML) and can include other types of information. Again, the example was presented for purposes of illustrating that trip information can be normalized and used for processing of the inferential location based service.

In a similar manner the profile can be structured and used for including a variety of preferences and automated actions of the customer and then evaluated and processed by the inferential location based service.

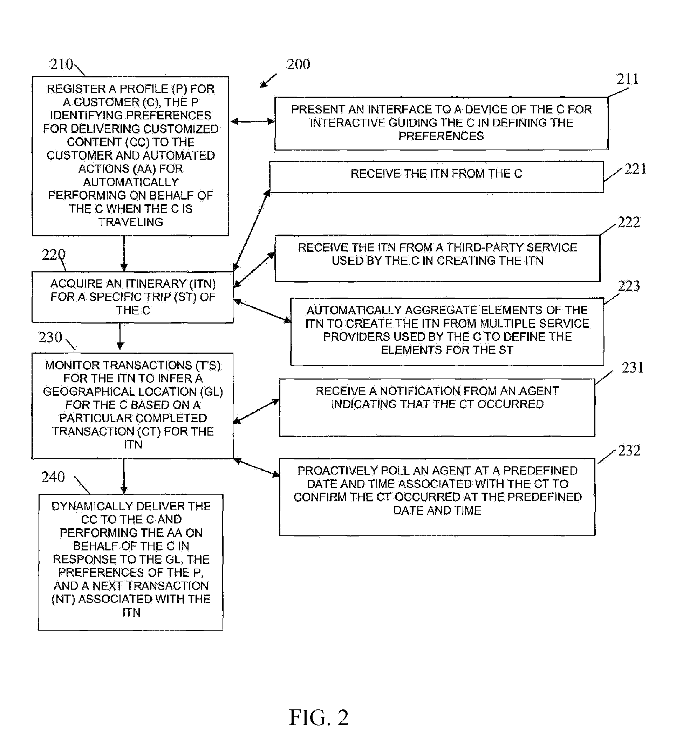

Also, the manner in which the itinerary is acquired by the inferential location based service can occur in a variety of manners. Some of these are discussed more completed below with reference to the method 200 of the FIG. 2. Furthermore, the format that the itinerary is received in (received by the inferential location based service) can be in a different format than a particular structured format that the inferential location based service uses to monitor the itinerary. Moreover, the itinerary can be received from the customer all at once in one communication session or piecemeal overtime in a variety of separate communication sessions. Still further, the itinerary can be received from a specific third-party travel service or from a variety of different third-party travel services or enterprises that participate in the transactions of the itinerary. In yet another situation, the itinerary can be culled by the inferential location based service for third-party travel or enterprise services by the inferential location based service (dynamically pulling the transactions via network transactions initiated by the inferential location based service). These mechanisms are not inclusive as others can be used as well by the inferential location based service to acquire the itinerary.

At 120, the inferential location based service receives a notification from an automated agent that indicates the customer has completed one transaction from the itinerary. In an embodiment, the automated agent is processed on a self-service device, such as a kiosk, which the customer uses when traveling for the trip defined via the itinerary. In another case, the automated agent processes in a cloud processing environment and monitors one or more self-service devices and interacts with them or network service for which they communicate to interact with the inferential location based service. The notification can include a variety of information as well that is predefined, configured, and/or dynamically negotiated between the automated agent and the inferential location based service.

For example, in one case, the automated agent may dynamically communicate a schema that dynamically defines the information included in the notification and how to automatically parse and acquire that information from the notification; the schema is communicated from the automated agent and the inferential location based service.

According to an embodiment, at 121, the inferential location based service identifies the automated agent based on an Internet Protocol (IP) address associated with an agent device (such as a kiosk or other self-service device), which the automated agent processes on.

In another case, at 122, the inferential location based service identifies the automated agent based on an agent identifier associated with metadata that accompanies the notification.

At 130, the inferential location based service infers a geographical location for the customer based on the one completed transaction. The inference can be drawn in a variety of manners; for instance, in the above presented example for a structured itinerary format the variable PORT includes an assignment value of PHX for Phoenix airport. Thus, if the notification from the automated agent is T1 complete by the customer, then the inferential location based service infers the customer is now at or was at (recently) the Phoenix airport.

It is noted that this inference as to the geographical location is made without the assistance of GPS, cellular triangulation, or any other mechanism tied to a device of the customer. No assistance is needed or used to infer the geographical location of the customer relative to the itinerary at any particular point in time. This applies throughout the embodiments of the invention presented herein.

According to an embodiment, at 131, the inferential location based service derives the inferred geographical location based on an enterprise identifier associated with the one completed transaction. So, if the completed transaction is associated with Hertz (trade mark) car rental and a previous processed transaction indicated a particular airport, then the inferred geographical location is the address to the Hertz car rental airport facility in the city of the airport.

In another case, at 132, the inferential location based service derives the inferred geographical location based on self-service device identifier associated with the automated agent. Here, a kiosk that processes the automated agent includes an identifier assigned to the automated agent or gleaned from metadata of the notification. The geographical location may then be obtained from a managed table that ties the identifier to the geographical location or a third-party service can be supplied the identifier or searched to acquire the geographical location.

At 140, the inferred geographical location dynamically pushes customized content to a device of the customer based on the inferred geographical location for the customer. By customized it is meant that each customer handled by the inferred geographical location can customize: the types of information, the format of each type of information, the timing for delivering information, and the device for the customer receiving the information.

The types of information can include a wide range of things some of which are discussed below. It is noted some types of information can be, but is not limited to: directly tied to the itinerary as a whole (such as activities in the current inferred geographical location), directly tied to a next transaction of the itinerary (such as hotel check in), indirectly tied to a next transaction of the itinerary (such as directions to the hotel), opportunities of interest to the customer in the current inferred geographical location (advertisements), opportunities of interest to the customer in a next geographical location (inferred from the next transaction of the itinerary), and the like.

According to an embodiment, at 141, the inferred geographical location performs an automated action (can be a series of automated actions as well) on behalf of the customer to complete or assist in partially completing a next transaction from the itinerary. The inferred geographical location can then also provide an indication of the act to the customer within the customized content.

For example, at 142, the inferred geographical location can perform one or more automated actions on behalf of the customer to: push navigational instructions to the device of the customer (the navigation instructions having a start location of the current inferred geographical location to a next inferable geographical location associated with a next transaction of the itinerary); check the customer into a hotel associated with the next transaction (e.g., pushed as a QR code to a phone of the customer that the customer can scan at the room of the hotel that he/she is to check into, request keys be programmed, via automated means at the hotel and waiting at the desk for the customer, and the like); check out a car rental associated with the next transaction (e.g., perform the processing via automated means at the car rental and identify that the car is in slot number X with the keys and paperwork inside waiting for the customer, and the like); reserve dinner, event and/or show commitments (e.g., use automated processing mechanisms to interface with these enterprises and acquire confirmation numbers, electronic bar codes provided to the phone of the customer, and the like); acquire a boarding pass for transportation associated with the next transaction (e.g., push a QR code or bar code to a phone of the customer for scanning at the transportation facility to board, and the like); and/or perform still other automated actions.

In another situation, at 143, the inferred geographical location resolves the device and the format of the customized content dynamically pushed to the customer based on a registered profile assigned to the customer.

In still another case, at 144, the inferred geographical location can also perform a variety of security based operations to ensure the customer is actually commencing the trip associated with the itinerary and that it is not an imposter. The security can be achieved in a variety of manners. Moreover, the level of security and types of security can also be defined by the customer via the customer's managed profile. So, at 144, the inferred geographical location can resolve that the device is properly associated with the customer by sending a request to the device of the customer requesting a validation message for purposes of confirming the inferred geographical location for the customer. This is done before the custom ized content is dynam ically pushed to the device of the customer. The request can require a PIN code be texted back or can be as simple as a blank text that the customer replied to via the phone of the customer. It can also be more complex requiring the customer to log into a specific site and validate the location and the like. Again, the level of security and the type of security can be configured by the customer.

In an embodiment, at 150, the inferred geographical location receives a second notification from a second automated agent that indicates the customer has completed a second transaction from the itinerary. Next, the inferred geographical location infers a new geographical location for the customer based on the second transaction and then dynamically pushes different customized content to the device of the customer based on the inferred new geographical location for the customer.

In fact, the processing at 150 simply illustrates that the inferred geographical location can actively monitor the customer as the customer travels in accordance with the itinerary and interact with a variety of automated agents to automate the customers experience while on the trip.

FIG. 2 is a diagram of another method 200 for trip monitoring with inferential location based services, according to an example embodiment. The method 200 (hereinafter "inferential trip assist service") is implemented as instructions within a non-transitory computer-readable (processor-readable) storage medium that executes on one or more processors; the processors are specifically configured to execute the inferential trip assist service. The inferential trip assist service is operational over a network; the network is wired, wireless, or a combination of wired and wireless.

The inferential trip assist service is presented from another and in some ways enhanced perspective of the inferential location based service represented by the method 100 of the FIG. 1.

At 210, the inferential trip assist service registers a profile for a customer. The profile identifies preferences for delivering customized content to the customer and for processing automated actions on behalf of the customer when the customer is traveling.

According to an embodiment, at 211, the inferential trip assist service presents an interface to a device of choice for the customer and then interactively guides the customer in defining the preferences (delivering customized content and performing automated actions).

At 220, the inferential trip assist service acquires the itinerary for a specific trip of the customer. As stated above with reference to the method 100 of the FIG. 1 this can occur in a variety of manners.

For example at 221, the inferential trip assist service can receive the itinerary directly as a whole or indirectly via a sub transaction from the customer.

In another case, at 222, the inferential trip assist service receives the itinerary from a third-party service used by the customer in creating the itinerary. Here, the customer may register or actually create the itinerary at a travel service web site (in one case) and that travel service then provides the itinerary to the inferential trip assist service (as authorized by the customer to do so).

In yet another scenario, at 223, the inferential trip assist service automatically aggregates elements of the itinerary to create the itinerary from multiple service providers used by the customer to define the elements for the specific trip. These elements can be pushed by the service providers to the inferential trip assist service or pulled from the service providers by the inferential trip assist service.

At 230, the inferential trip assist service monitors transactions for the itinerary to infer geographical location for the customer based on a particular completed transaction for the itinerary. Some detailed mechanisms for achieving the monitoring was presented above with reference to the method 100 of the FIG. 1.

For example, at 231, the inferential trip assist service receives a notification from an agent that indicates that a completed transaction for the itinerary occurred.

In another situation, at 232, the inferential trip assist service proactively polls an agent at a predefined date and time associated with the completed transaction (expected to be completed) to actually confirm that the completed transaction occurred at the predefined date and time.

At 240, the inferential trip assist service dynamically delivers the customized content to the customer and performs the automated actions on behalf of the customer in response to: the inferred geographical location, the preferences of the profile, and a next transaction associated with the itinerary. Some mechanisms and manners for achieving this were presented in detail above with reference to the method 100 of the FIG. 1.

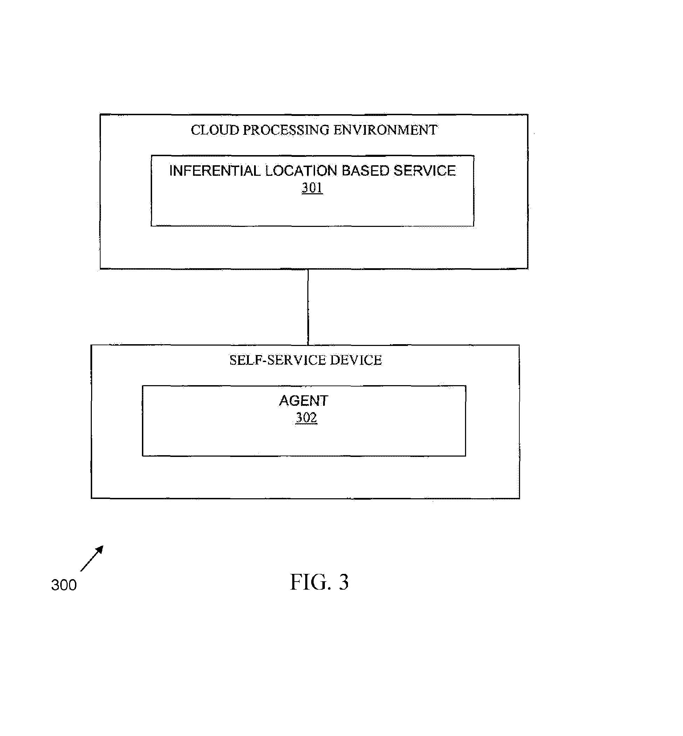

FIG. 3 is a diagram of a trip monitoring with inferential location based services system 300, according to an example embodiment. The trip monitoring with inferential location based services system 300 includes one or more processors that are specifically configured to perform, *inter alia,* the processing associated with the methods 100 and 200 of the FIGS. 1 and 2, respectively. The trip monitoring with inferential location based services system 300 may also include a variety of other hardware components, such as network adapters, memory, display screen(s), input mechanisms, and the like. Furthermore, the trip monitoring with inferential location based services system 300 is operational over a network and the network can be wired, wireless, or a combination of wired and wireless.

The trip monitoring with inferential location based services system 300 includes an inferential location based service 301 and an agent 302. Each of these and their interactions with one another will now be discussed in turn.

A cloud processing environment includes one or more processors and is configured and programmed with the inferential location based service 301. The inferential location based service 301 executes within the cloud processing environment. Example processing associated with the inferential location based service 301 was presented above in detail with reference to the methods 100 and 200 of the FIGS. 1 and 2, respectively.

The inferential location based service 301 is configured to infer geographical locations for a customer based on completed or soon-to-be completed transactions. The transactions defined in itineraries for trips of the customer. Moreover, the inferential location based service 301 is configured to deliver customized content and perform one or more automated actions for the customer based on the inferred geographical locations.

In an embodiment, the inferential location based service 301 is also configured to manage profiles for the customer. The profiles define the customized content and the automated actions.

In another case, the inferential location based service 301 is configured to interact with additional agents. Each additional agent associated with a different self-service device from that which is associated with the agent 302 and from remaining ones of the additional agents.

Furthermore, a self-service device includes one or more processors and is configured and programmed with the agent 302. The agent executes on the self-service device.

The agent 302 configured to interact with the inferential location based service 301 for purposes of reporting the completed transactions (proactively via a push or passively via a pull from the inferential location based service 301) and/or for purposes of assisting the inferential location based service 301 in performing the one or more automated actions.

The above description is illustrative, and not restrictive. Various modifications may be made to the above described embodiments within the scope of the present invention.

## Claims

1. A processor-implemented method programmed in a non-transitory processor-readable medium and to execute on one or more processors configured to execute the method, comprising:
registering a profile for a customer, the profile identifying preferences for delivering customized content to the customer and automated actions for automatically performing on behalf of the customer when the customer is traveling;
acquiring an itinerary for a specific trip of the customer;
monitoring transactions for the itinerary to infer a geographical location for the customer based on a particular completed transaction for the itinerary; and
dynamically delivering the customized content to the customer and performing the automated actions on behalf of the customer in response to the geographical location, the preferences of the profile, and a next transaction associated with the itinerary.

2. The method of claim 1, wherein registering a profile for a customer further includes presenting an interface to a device of the customer for interactively guiding the customer in defining the preferences.

3. The method of claim 1 or 2, wherein acquiring an itinerary for a specific trip of the customer further includes receiving the itinerary from the customer.

4. The method of any preceding claim, wherein acquiring an itinerary for a specific trip of the customer further includes receiving the itinerary from a third-party service used by the customer in creating the itinerary.

5. The method of any of claims 1 to 3, wherein acquiring an itinerary for a specific trip of the customer further includes automatically aggregating elements of the itinerary to create the itinerary from multiple service providers used by the customer to define the elements for the specific trip.

6. The method of any preceding claim, wherein the step of monitoring transactions for the itinerary to infer a geographical location for the customer further includes receiving a notification from an agent indicating that the particular completed transaction occurred.

7. The method of any of claims 1 to 5, wherein monitoring transactions for the itinerary to infer a geographical location for the customer further includes proactively polling an agent at a predefined date and time associated with the particular completed transaction to confirm the particular completed transaction occurred at the predefined date and time.

8. The method of any preceding claim, wherein the step of dynamically delivering the customized content to the customer and performing the automated actions on behalf of the customer further includes performing an automated action on behalf of the customer to complete or assist in partially completing a next transaction from the itinerary and providing an indication of the automated action to the customer in the customized content.

9. A system, comprising:
a cloud processing environment having one or more processors and configured and programmed with a inferential location based service to execute the inferential location based service, which is configured to infer geographical locations for a customer based on completed transactions in itineraries for trips of the customer and configured to deliver customized content and perform automated actions for the customer based on the inferred geographical locations; and
a self-service device having one or more processors and configured and programmed with an agent to execute the agent, which is configured to interact with the inferential location based service to report the completed transactions and/or assist the inferential location based service in performing the automated actions.

10. The system of claim 9, wherein the inferential location based service is configured to manage profiles for the customer defining the customized content and the automated actions.

11. The system of claim 9 or 10, wherein the inferential location based service is configured to interact with additional agents, each additional agent associated with a different self-service device from that which is associated with the agent and remaining ones of the additional agents.
